# EUROPEAN PATENT APPLICATION

(11) **EP 3 385 659 A1**
(43) Date of publication of application: **10.10.2018**
(21) Application number: 18165556.4
(22) Date of filing: 03.04.2018
(51) Int. Cl.: F42B 8/04, F42B 39/08, F42C 19/08, F42C 19/10, F42C 19/12, B25C 1/16

(54) **BLANK CARTRIDGES**

(30) Priority: 04.04.2017 GB 201705389
(71) Applicant: Accles & Shelvoke Limited, Sutton Coldfield, West Midlands B76 1AL (GB)
(72) Inventor: TAYLOR, Philip, Sutton Coldfield, West Midlands B76 1BA (GB)
(74) Representative: Barker Brettell LLP

(57) **Abstract**

A blank cartridge device (1) comprises a plastics body (2) defining several cylindrical chambers (3). Each chamber (3) receives a propellant charge (4) and has an input end (6) at least partly open initially and receiving an ignition means (5) to seal the input end, and an output end (8) open initially, and sealed by an output strip (7). The ignition means (5) may be a centre fire primer cap (18) or an electrode (30). The body (2) may also have lugs (10) to co-operate with an indexing mechanism of a device using the cartridges to move the chambers (3) sequentially into a firing position. A method of making the devices is also disclosed.

## Description

This invention relates to blank cartridges and a method of making them. Such cartridges may be used to power the captive bolt of a device for use in the humane slaughter of animals, where the bolt stuns the animal.

These animal stunning devices use individual blank cartridges, comprising a brass case containing a propellant and an ignition charge for igniting the propellant when a trigger is actuated. A cartridge is loaded for each use, and extracted after use so that another one can be loaded. The device is safe to use, but it can be awkward in use, because of the need to extract and load a cartridge each time. This also makes it relatively time-consuming to use. The spent cases must also be handled carefully, as if they are dropped they can be hazardous to the user or the animals.

The cases are of standard size to ensure that they fit the device properly, but need to be filled with different volumes of propellant according to the type of animal being stunned. This makes manufacture of the cartridges more difficult and expensive, as different dispensing plates are needed for the propellant, according to the power required.

Other devices such as powder-actuated nail guns also use blank cartridges. It is known for nail gun cartridges like the cartridges described above, to be mounted on a plastic strip as a magazine and fed through the nail gun automatically. US 5 279 201 describes a magazine consisting of individual cartridges made of plastics, having a conical chamber for the propellant and ignition charge, and a plastics lid sealing the chamber, and attached to a plastics strip. This arrangement has not come into commercial use, as it is complex to make. Commercially available animal stunning devices have not so far made use of a magazine for loading blank cartridges.

According to a first aspect of the invention, we provide a blank cartridge device comprising a plastics body defining one or more cylindrical chambers, each chamber receiving a propellant charge and having an input end at least partly open initially and receiving an ignition means to seal the input end, and an output end open initially, and sealed by an output strip.

The blank cartridge device is easy to make, as the cylindrical chamber or chambers are simple to make by injection moulding of the body, and easy to seal, using the ignition means at the input end and output strip at the output end. Each chamber of the body is a container for the propellant, so that it is not necessary to make individual cartridges and mount them on a separate strip. Where several chambers are formed by one moulding, a single output strip can seal all of them.

The volume of the chambers can be chosen to provide the volume of propellant according to the power required. Each chamber can simply be filled completely with propellant to provide the correct volume. The colour of the body may be chosen to indicate the power of the cartridge. Conveniently, the volume of a chamber is varied by changing the diameter of the chamber.

The output strip is preferably waterproof, and may be of paper, polymer or metal. It can be sealingly attached to the output end of each chamber in any suitable way.

In one embodiment the input end of each chamber is wholly open initially, and the ignition means comprises a flat strip impregnated on one side with a primary explosive, the strip being attached to the body with the explosive side inwards, such that it seals the input end of the chamber.

In another embodiment the input end of each chamber is partially open initially, and has a central aperture in which a centre fire primer cap is sealingly received.

In these two embodiments the ignition mechanism is actuated by a mechanical strike.

In yet another embodiment the input end of each chamber is partially open initially, having a central aperture in which an electrode is sealingly received, and the output strip is of metal. The output strip provides a ground potential, so that a voltage applied to the electrode discharges to the output strip through the propellant, causing it to ignite.

The body preferably has several chambers, conveniently ten. Coupling means may be provided on each end of the body, so that bodies may be coupled together for use. The body may also be provided with external formations, such as lugs, for engagement with an indexing mechanism of a device using the cartridges. This enables the chambers to be moved sequentially into a firing position.

According to a second aspect of the invention, we provide a method of making a blank cartridge device comprising the following steps:
a) providing a plastics body defining one or more cylindrical chambers, each chamber having an input end which is at least partially open, and an open output end;
b) providing an ignition means at the input end of each chamber and sealing the input end;
c) filling each chamber with propellant from the output end; and
d) sealing the output end with an output strip.

This method provides a particularly simple way of making one or more blank cartridges as a single device.

In one embodiment the input end of each chamber is wholly open, and the ignition means comprises a flat strip impregnated on the one side with a primary explosive, the strip being attached to the body with the explosive side inwards to seal the input end of each chamber, and the output end being sealed with a waterproof output strip of paper, polymer or metal.

In another embodiment the input end of each chamber is partially open, having a central aperture, the ignition means comprising a centre fire primer cap sealingly mounted in the aperture, and the output end being sealed with a waterproof output strip of paper, polymer or metal.

In yet another embodiment the input end of each chamber is partially open, having a central aperture, the ignition means comprising an electrode sealingly mounted in the central aperture, and the output end of each chamber being sealed with a metal output strip.

Embodiments of both aspects of the invention are illustrated, by way of example only, in the accompanying drawings, in which:-
**Figure 1** is an exploded perspective view showing the components of a blank cartridge device according to the invention;
**Figure 2** is a top view of a body of the device of Figure 1;
**Figure 3** is an underneath view of the body of Figure 2;
**Figure 4** is a section along the line of 4-4 of Figure 2 with the device partly assembled;
**Figure 5** is a perspective view of the assembled device;
**Figure 6** is similar to Figure 4, but shows a modified device; and
**Figure 7** is an exploded perspective view showing the components of the modified device of Figure 6.

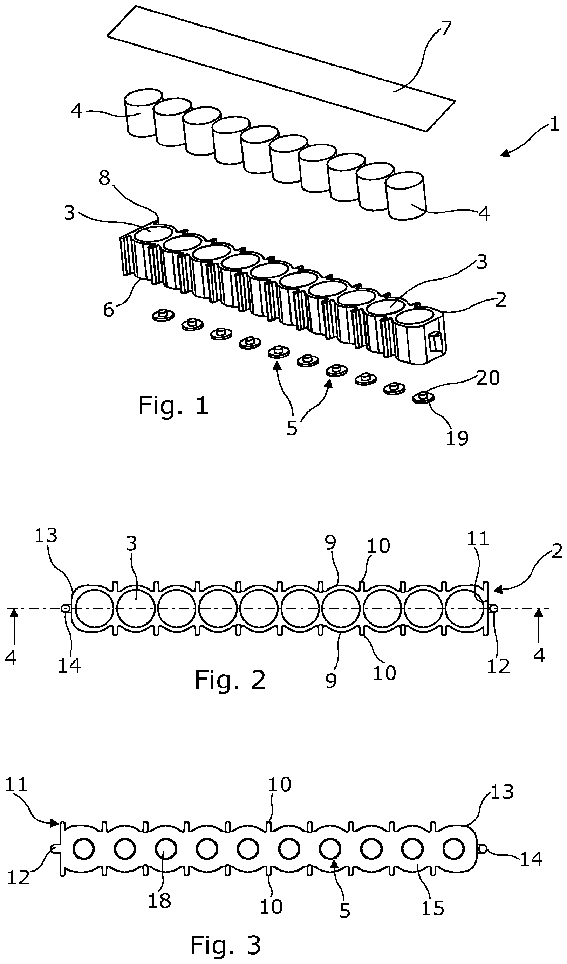

Figures 1 to 5 show a blank cartridge device 1 comprising a plastics body 2 with cylindrical chambers 3, each chamber 3 receiving a propellant charge 4, an ignition means 5 at an input end 6 of each chamber 3 and an output strip 7 sealing the opposite output end 8 of each chamber 3. Each chamber 3 thus constitutes a blank cartridge.

The body 2 is formed by injection moulding from a suitable plastics material, such as 60% glass-filled nylon, with ten chambers 3 arranged along the length of the body 2. As best seen in Figures 2 and 3, opposing longitudinal external surfaces 9 are formed with projecting lugs 10. The lugs 10 are formed between adjacent pairs of chambers 3, with lugs 10 also being formed at one end 11 of the body 2. The lugs 10 cooperate with an indexing mechanism on an animal stunning device (not shown) in order to bring the chambers 3 sequentially into a firing position in the stunning device. The end 11 of the body 2 is also formed with a hook 12, while the opposing end 13 is formed with a complementary eye 14. The hook 12 and eye 14 are used to couple bodies 2 together.

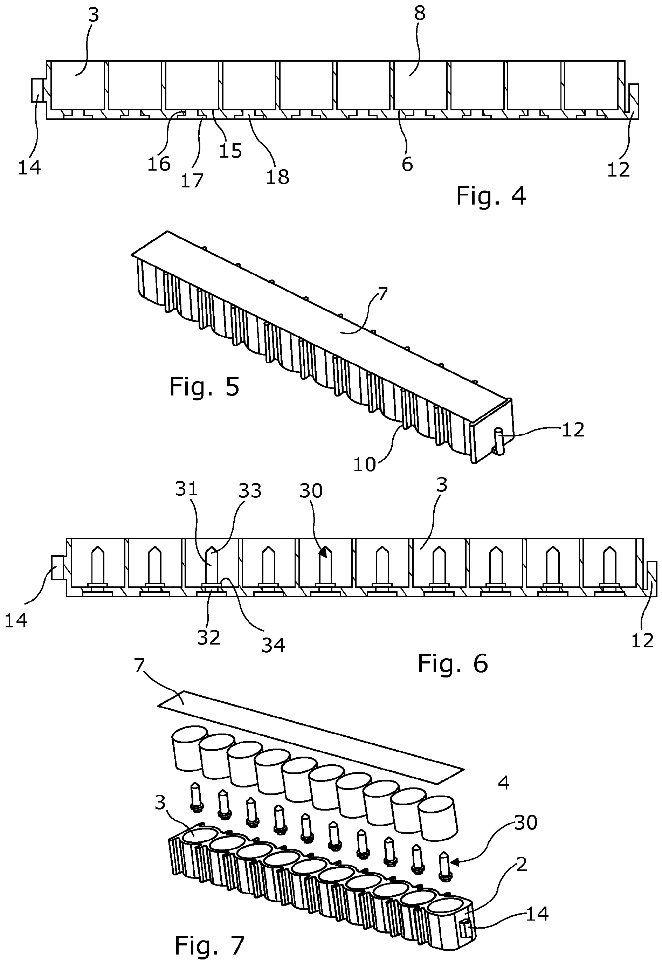

As best seen in Figures 3 and 4, the input end 6 of each chamber 3 is partially closed, being formed with a wall 15 having a central circular aperture 16, surrounded on its external surface by an annular groove 17. The aperture 16 and groove 17 are adapted to receive the ignition means 5, which comprises a centre fire primer cap 18. As best seen in Figures 1 and 4 the cap 18 has a circular plate 19 received in the groove 17 and a central projection 20 received in the aperture 16. The cap 18 seals the aperture 16, as it is a pressure fit in the aperture.

The output end 8 of each chamber 3 is open, in order to receive the propellant charge 4 (shown schematically in Figure 1). The propellant charge 4 fills a chamber 3 completely, and the open end 8 is sealed by the output strip 7, which is attached by an adhesive to the body 2, or in any other suitable way. The output strip 7 is waterproof, and made of paper, polymer or metal as required. It will be appreciated that the output strip 7 is combustible, so that it burns off when the propellant is ignited.

The blank cartridge device 1 is assembled by taking a body 2, inserting a centre fire primer cap 18 from the external surface of the wall 15 into the central aperture 16 of each chamber 3 to seal its input end 6, filling each chamber 3 completely with a propellant charge 4, and then sealing the output strip 7 to the body 2 to seal the open output end 8 of each chamber 3. The finished device 1 is shown in Figure 5.

It will be appreciated that the devices can be coupled together for use using the hook 12 and eye 14. For use, the devices are loaded into an animal stunner, for example. The individual cartridges are brought into a firing position by an indexing mechanism using the lugs 10, and are fired by a firing block striking the cap 18, the firing block being actuated by operation of a trigger.

Figures 6 and 7 show a modification of the device 1, and corresponding reference numerals have been applied to corresponding parts. In Figures 6 and 7 the ignition means 5 is modified, while the body 2, propellant charge 4 and output strip 7 have the same form as in Figures 1 to 5. In Figures 6 and 7 each cap 18 is replaced by an electrode 30, mounted sealingly in the central aperture 16 of a chamber 3. Each electrode 30 is a small cylindrical rod 31, with an outer end 32 received in the central aperture 16. The rod 31 extends into the chamber 3, and terminates in a pointed inner end 33, short of the open output end 8. A small flange 34 engages the input end 6 round the aperture 18 to locate and seal the electrode 30 in the chamber 3. The output strip 7 is of metal, such as copper foil, to provide a ground potential, so that a voltage applied to the input end of the electrode 30 discharges to the output strip 7 through the propellant in the gap between the pointed end 33 of the electrode 30 and the output strip 7. This causes the propellant to ignite.

The device 1 of Figures 6 and 7 is made in a similar way to that of Figures 1 to 5, except that each electrode 30 is assembled from the open end 8 of a chamber 3, rather than from the external surface of the wall 15 of the body 2.

For use, the devices are loaded into an animal stunner, for example. The individual cartridges are brought into a firing position by an indexing mechanism using the lugs 10. A voltage applied to the electrode discharges to the output strip through the propellant, causing it to ignite.

In a modification (not shown) the wall 15 of each chamber 3 is omitted, so that the input end 6 of each chamber 3 is fully open, like the output end 8. The ignition means 5 then comprises a flat strip impregnated on one side with a primary explosive. The strip is attached to the body with the explosive side inwards, in a manner which seals the input end 6 of each chamber 3. The cartridges of this embodiment will be fired by a mechanical strike.

It will be appreciated that the amount of propellant in each propellant charge 4 determines the power of each cartridge, and that different powers are required for different uses. Where the blank cartridge is to be used in an animal stunning device, different powers are required for different animals. With the device 1 of any of the embodiments it is easy to make a device with a given amount of propellant by varying the volume of each chamber 3. As each chamber 3 is completely filled with propellant and is cylindrical it is easy to calculate the radius of each chamber 3 needed to provide a given volume, and to manufacture the body 2 accordingly. It is also easy to make the different bodies in different colours to indicate the power of each cartridge.

## Claims

1. A blank cartridge device (1) comprises a plastics body (2) defining one or more cylindrical chambers (3), each chamber (3) receiving a propellant charge (4) and an ignition means (5) and having an input end (6) and an output end (8), **characterised in that** the input end (6) of each chamber (3) is at least partly open initially and is sealed by the input end, and the output end (8) is open initially, and sealed by an output strip (7).

2. A blank cartridge device as claimed in claim 1, in which several chambers (3) are formed by one moulding, and a single output strip (7) seals all of the chambers.

3. A blank cartridge device as claimed in claim 1 or claim 2, in which the volume of the chambers (3) is chosen to provide the volume of propellant according to the power required, each chamber (3) being filled completely with propellant to provide the correct volume.

4. A blank cartridge device as claimed in claim 1, in which the volume of a chamber (3) is varied by changing the diameter of the chamber.

5. A blank cartridge device as claimed in any preceding claim, in which the output strip (7) is waterproof, and is made of paper, polymer or metal.

6. A blank cartridge device as claimed in any preceding claim, in which the output strip (7) is sealingly attached to the output end (8) of each chamber (3).

7. A blank cartridge device as claimed in any preceding claim, in which the input end (6) of each chamber (3) is wholly open initially, and the ignition means (5) comprises a flat strip impregnated on one side with a primary explosive, the strip being attached to the body with the explosive side inwards, such that it seals the input end of the chamber.

8. A blank cartridge device as claimed in any of claims 1 to 6, in which the input end (6) of each chamber (3) is partially open initially, and has a central aperture (16) in which a centre fire primer cap (18) is sealingly received.

9. A blank cartridge device as claimed in any of claims 1 to 6, in which the input end (6) of each chamber (3) is partially open initially, having a central aperture (16) in which an electrode (30) is sealingly received, and the output strip (7) is of metal.

10. A blank cartridge device as claimed in any preceding claim, in which coupling means (12, 14) are provided on each end of the body (2), so that bodies may be coupled together for use.

11. A blank cartridge device as claimed in any preceding claim, in which the body (2) is provided with external formations (10) for engagement with an indexing mechanism of a device using the cartridges.

12. A method of making a blank cartridge device comprising the following steps:
a. providing a plastics body (2) defining one or more cylindrical chambers (3), each chamber having an input end (6) which is at least partially open, and an open output end (8);
b. providing an ignition means (5) at the input end of each chamber and sealing the input end;
c. filling each chamber with propellant (4) from the output end; and
d. sealing the output end with an output strip (7).

13. A method of making a blank cartridge device as claimed in claim 12, in which the input end (6) of each chamber is wholly open, and the ignition means (5) comprises a flat strip impregnated on the one side with a primary explosive, the strip being attached to the body with the explosive side inwards to seal the input end of each chamber, and the output end (8) is sealed with a waterproof output strip (7) of paper, polymer or metal.

14. A method of making a blank cartridge device as claimed in claim 12, in which the input end (6) of each chamber (3) is partially open, having a central aperture (16), and the ignition means comprises a centre fire primer cap (18) sealingly mounted in the aperture, and the output end (8) is sealed with a waterproof output strip (7) of paper, polymer or metal.

15. A method of making a blank cartridge device as claimed in claim 12, in which the input end (6) of each chamber (3) is partially open, having a central aperture (16), and the ignition means comprises an electrode (30) sealingly mounted in the central aperture, and the output end (6) of each chamber is sealed with a metal output strip (7).
